# EUROPEAN PATENT APPLICATION

(11) **EP 1 830 113 A1**
(43) Date of publication of application: **05.09.2007**
(21) Application number: 06425140.8
(22) Date of filing: 02.03.2006
(51) Int. Cl.: F16H 63/38

(54) **Control device for a gear change of a motor vehicle**

(71) Applicant: ELASIS - Società Consortile per Azioni, 80038 Pomigliano d'Arco (IT)
(72) Inventor: Di Martino, Alessandro c/o Elasis-S.C.p. Azioni, 80038 Pomigliano D'Arco (IT)
(74) Representative: Jorio, Paolo

(57) **Abstract**

A control device (16) for a gear change (2) of a motor vehicle has a control spindle (110), which extends along an axis thereof (111), is provided with at least one radial control finger (117), and is movable with respect to a fixed supporting structure (20) with an axial translational motion and with a rotary motion to select the ranges of the gears, and, for each range, to engage at least one gear starting from an idle condition; the spindle (110) is carried into a pre-defined axial reference position and into a pre-defined angular reference position by two substantially spherical bodies (123), which are carried by the fixed supporting structure (20), and act on centring profiles (156, 157) shaped in such a way as to define the two reference positions; said centring profiles are provided on one and the same positioning body (122) coupled in a fixed position with respect to the control spindle (110).

## Description

The present invention relates to a control device for a gear change for a motor vehicle.

As is known, the configurations of an automobile gear change are characterized by rather consolidated schemes, which envisage use of: a primary shaft, on which the driving gears are fitted, either idle or fixed; a secondary shaft, on which the driven gears are fitted, again either idle or fixed; a mechanism for synchronization and engagement between the idle gears and the shaft on which these are fitted; a pair of gears for final reduction of the transmission ratio at output from the secondary shaft; and, finally, a differential, which supplies the final output of the motion to two axle shafts.

The above arrangement is accompanied by a control device, which constitutes an interface between the driver and the synchronization and engagement mechanism. In particular, the transmission ratios or gears are engaged selectively by operating a gear lever in the passenger compartment. Said lever actuates a finger-shaped control member, which in turn actuates a series of gearshift forks, which are movable in a direction parallel to the axes of the primary and secondary shafts. The gearshift forks are arranged on the outside of said shafts, correspond to respective ranges of the gears (for example, the range of the first and second gears, the range of the third and fourth gear, and the range of the fifth and reverse gears), and are associated to respective parallel control seats facing one another, engaged by the finger member. The finger member is movable along a selection path that freely traverses the control seats for selecting one of said control seats and, hence, a range of the gears (first and second, or else third and fourth, or else fifth and reverse) and along an engagement path parallel to the planes of lie of the control seats for displacing the seat selected and engaging one of the two gears of the corresponding range, said finger member shifting in opposite directions starting from a central position, to which there corresponds an idle or "neutral" condition. In general, one of the two paths of the finger member is rectilinear, whilst the other is defined by a rotation.

In known solutions, each gearshift fork engages a corresponding coupling of the synchronization and engagement mechanism. For each pair of idle gears associated to the same range and fitted on the same shaft (whether primary or secondary), the synchronization and engagement mechanism is normally provided with: a hub fitted externally on the shaft; a pair of driving rings arranged on opposite axial sides of the hub, each of which is angularly fixed with respect to a corresponding gear and which have respective external toothings; and a pair of rings for synchronizing the motion that are able to activate the driving rings selectively.

The synchronizing rings are each set axially between the hub and the corresponding driving ring, have respective conical friction surfaces designed to co-operate, in use, with corresponding conjugated friction surfaces carried by the driving rings, and are provided with respective external toothings.

The coupling is set on the outside of the hub and is rendered angularly fixed with respect to the hub itself by means of an internal toothing of its own. The coupling can slide axially on opposite sides of the hub under the action of the corresponding gearshift fork. During the axial travel of the coupling in one direction or else in the other, the internal toothing of the coupling engages first the external toothing of the synchronizing ring and then the external toothing of the driving ring, when the relative speed of the latter with respect to the synchronizing ring goes to zero as a result of the contact between the respective conjugated friction surfaces.

In the control device that sets in connection the gear lever with the synchronization and engagement mechanism, there is felt the need to bring the control finger back into a reference or resting position when the gears are disengaged and the action of the driver on the gear lever ceases, both as regards the selection path and as regards the engagement path.

The aim of the present invention is to provide a control device for a gear change for a motor vehicle which will enable the need referred to above to be met in a simple and economically advantageous way, with contained overall dimensions and by means of a relatively small number of components.

According to the present invention a control device for a gear change for a motor vehicle is provided, the control device comprising:
- a control spindle extending along an axis thereof, provided with at least one radial control finger, and movable with respect to a fixed supporting structure with an axial translational motion and with a rotary motion about said axis, to select the ranges of the gears and, for each of said ranges, to engage at least one gear starting from an idle condition;
- first axial-positioning means to bring said control spindle into a pre-defined axial reference position along said axis with respect to said fixed supporting structure;
- second axial-positioning means to bring said control spindle into a pre-defined angular reference position about said axis with respect to said fixed supporting structure;
characterized in that said first and second positioning means comprise:
- thrust means designed to be carried by said fixed supporting structure; and
- respective centring profiles, which are coupled to said thrust means, are shaped in such a way as to define said reference positions and are provided on one and the same positioning body coupled in a fixed position with respect to said control spindle.

Preferably, the centring profiles of said first positioning means and of the second positioning means are provided on one and the same track of said positioning body, on which said thrust means act, and are defined, respectively, by a plane of section orthogonal to said axis and by a plane of section on which said axis lies.

In particular, said first and second positioning means comprise two said tracks diametrally opposite to one another with respect to said axis.

Conveniently, said thrust means comprise at least one substantially spherical body partially housed in a seat designed to be carried in a fixed position by said fixed supporting structure and housing elastic means that exert a thrust on said substantially spherical body towards said positioning body in a radial direction.

For a better understanding of the present invention, a preferred embodiment is now described, purely by way of nonlimiting example, with reference to the annexed plate of drawings, wherein:
- Figure 1 is a cross section of a preferred embodiment of the control device of a gear change for a motor vehicle according to the present invention;
- Figure 2 shows at an enlarged scale, with parts in cross-sectional view and with parts removed for reasons of clarity, a device for synchronization and engagement of the gear change shown in Figure 1, at the end of an engagement manoeuvre;
- Figure 3 is a perspective view of the synchronization and engagement device shown in Figure 2, sectioned with a different plane of section and set in an idle condition;
- Figure 4 is an exploded view of some components of the synchronization and engagement device shown in Figures 2 and 3;
- Figure 5 is a perspective view, at an enlarged scale and with parts in exploded view, of some items of the control device shown in Figure 1;
- Figure 6 schematically shows the gear lever of the gear change of Figure 1;
- Figure 7 is a front perspective view of the control device shown in Figure 1;
- Figure 8 is an exploded perspective view of some items shown in Figure 7.

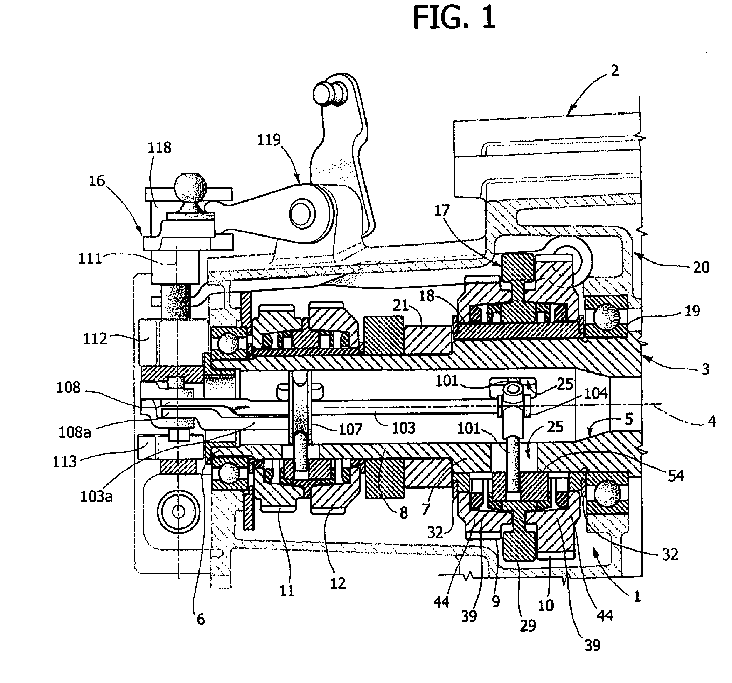

In Figure 1, the reference number 16 designates a control device forming part of a gear change 2 or transmission unit (partially shown) for a motor vehicle (not shown).

The gear change 2 comprises two or three transmission shafts that are parallel to one another, of which one is the primary driving shaft. Figure 1 shows partially just one of said shafts, designated by the reference number 3. The shaft 3 has an axis designated by 4, is axially hollow, i.e., has a cavity 5 that gives out at one end 6 through an opening, and comprises two intermediate portions 7 and 8, which carry respective pairs of gears, designated, respectively, by 9, 10 and by 11, 12.

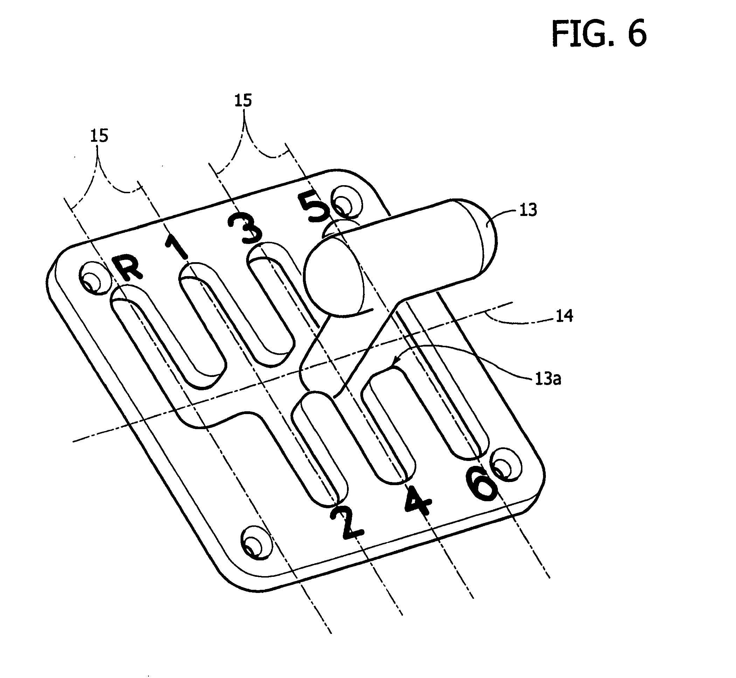

The gears 9-12 are angularly idle and axially fixed with respect to the shaft 3 and mesh permanently with respective gears (not shown) fitted on another shaft of the gear change 2. Each pair of idle gears is associated to a corresponding range of gears, which are activated by the driver of the motor vehicle by operating a control grip 13, for example, the gear lever that is shown in Figure 6 and that is movable in a grid 13a of seats. Via said grip 13 it is possible to select the different ranges of the gears, i.e., the range of the first and second gears, the range of the third and fourth gears, the range of the fifth and sixth gears, and the range of the reverse gear, by shifting the grip 13 in the grid 13a along a transverse selection path 14 and keeping in any case the gear change 2 in a neutral condition, and it is possible to engage, for the range selected, the two corresponding gears, shifting the grip 13 in the grid 13a along a longitudinal engagement path 15 starting from a central position in one direction or, respectively, in the opposite one.

Once again with reference to Figure 1, the grip 13 actuates a device 1 for synchronization and engagement via the control device 16. The following description refers to the part of the device 1 that is associated to the pair of gears 9 and 10, it being understood that the remaining part associated to the other ranges is analogous.

The device 1 comprises a hub 17, which is fixed and coaxial with respect to the shaft 3 and comprises, in turn, an internal bushing 18, which is fitted on the portion 7 in a fixed angular position, for example via a grooved coupling (not shown), and is withheld axially, on one side, by the internal ring of a bearing 19, which keeps the shaft 3 coupled, so that it can turn axially, to a supporting structure 20 obtained via casting, and on the other side by a locator spacer ring 21 fitted in a fixed axial position on the shaft 3.

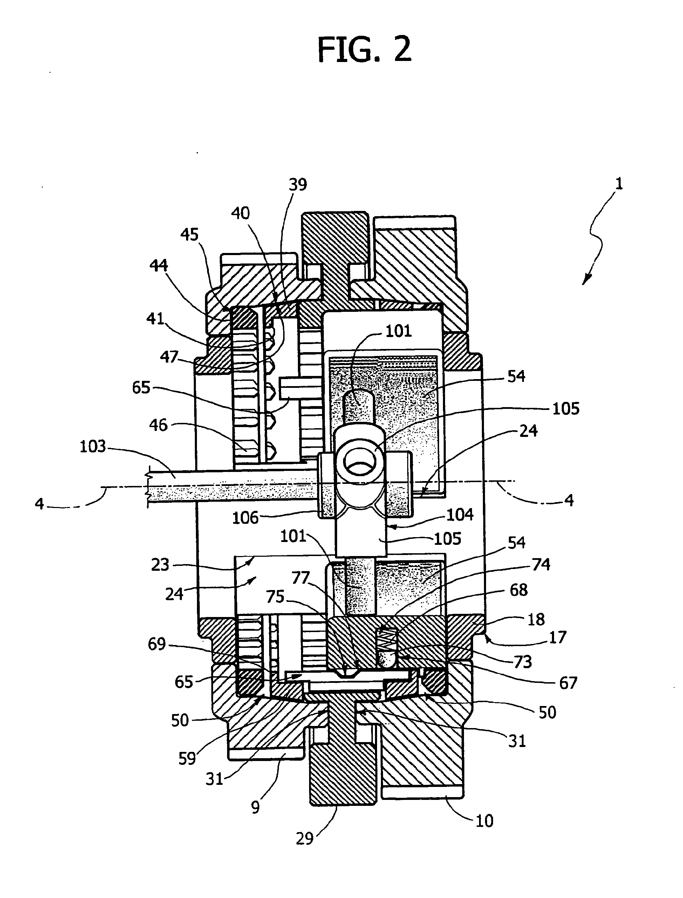

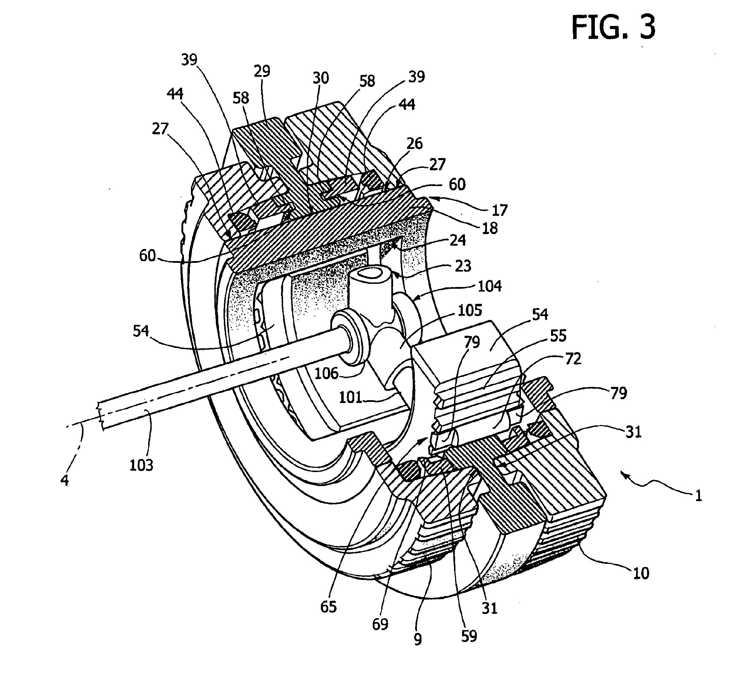

According to what is shown in Figures 2 and 3, the bushing 18 has three seats 23, which are arranged at 120° apart from one another about the axis 4, have the shape of a cylindrical sector, pass in a radial direction through the bushing 18, and have respective pairs of plane axial-guide surfaces 24 facing one another in a circumferential direction. In a position corresponding to the seats 23, the shaft 3 has respective through slots 25, which are made in a radial direction and are axially elongated (Figure 1).

The bushing 18 has an external cylindrical surface 26 (Figure 3) comprising two terminal areas 27, on which there are coupled idle and sliding the internal cylindrical surfaces of the gears 9 and 10, respectively.

The hub 17 further comprises an external ring gear 29, which is coupled in a fixed and coaxial position on a central area 30 of the surface 26 (Figure 3) in a way not described in detail, for example by means of welding, and defines a spacer between the gears 9 and 10. In particular, each gear 9, 10 is sandwiched in an axial direction between a corresponding face 31 of the ring gear 29 and a corresponding ring 32 fitted on the axial end of the bushing 18 (Figure 1).

Once again with reference to Figures 2 and 3, the device 1 further comprises two floating synchronizing rings 39, which are arranged on axially opposite sides of the ring gear 29 and are each provided with a conical friction surface 40 (Figure 2) facing radially outwards, and a toothing 41 facing radially inwards.

The device 1 further comprises two driving rings or flanges 44 coaxial to the bushing 18, each of which is set between a corresponding ring 39 and a corresponding gear 9, 10 and is fixed with respect to the latter. In particular, each ring 44 is welded to an internal surface 45 of the corresponding gear 9, 10 and has a toothing 46 facing radially inwards. The surface 45 of each gear 9, 10 comprises a conical friction area 47 (Figure 2), which is set in an intermediate position between the ring gear 29 and the corresponding ring 44, is mated to the surface 40 of the corresponding ring 39, and cooperates, in use, with said surface 40.

In particular, for each gear 9, 10, the surface 45, the bushing 18, and the face 31 of the ring gear 29 define an annular chamber 50 housing the rings 44 and 39.

The device 1 then comprises three engagement members 54, which are angularly set at equal distances apart about the axis 4, are completely housed, each, in a corresponding seat 23, have the shape of a cylindrical sector, are coupled to the surfaces 24 so as to receive or transmit a torque with respect to the bushing 18, and are able to slide jointly with one another under the control of the device 16 and under the guidance of the surfaces 24 so as to translate axially between a central idle, or neutral, position, in which they leave the gears 9, 10 idle, and two opposite lateral end-of-travel engagement positions, in which they render the shaft 3 angularly fixed with respect to the gear 9 or 10 selectively.

In particular, the members or sectors 54 have a cylindrical toothing 55 (Figure 3), which faces radially outwards and meshes progressively with the toothing 41 and hence with the toothing 46 during translation from the central idle position towards any one of the lateral end-of-travel engagement positions, thus rendering the bushing 18 angularly fixed with respect to the ring 44 and engaging the corresponding gear.

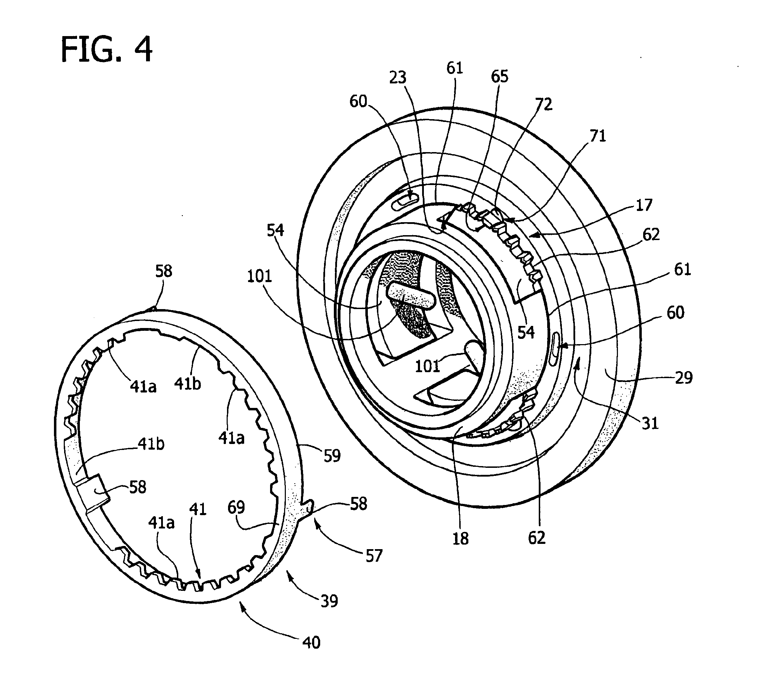

With reference to Figure 4, for each gear 9, 10, a device 57 of angular constraint is set axially between the face 31 and the ring 39 for limiting the angular fluctuation of the ring 39 with respect to the sectors 54. The device 57 comprises three axial teeth 58, which are fixed to an annular portion 59 of the ring 39 and are angularly set at a distance apart from one another, and three retention seats 60, which are made on the face 31 and each of which is engaged by a corresponding tooth 58 in a slidable way in a circumferential direction. The seats 60 have in a circumferential direction a dimension greater than that of the teeth 58 to enable a play equal to half the pitch of the toothing 41.

The internal radial surface of the ring gear 29 comprises three cylindrical portions 61 and three toothed portions 62 angularly alternating with one another about the axis 4. The portions 61 are coupled to the central area 30 of the surface 26, whilst the portions 62 are engaged by the toothing 55 of the respective sectors 54 in an axially slidable way.

With reference to Figures 2 and 4, the device 1 comprises three pre-synchronization small blocks 65, which axially face the rings 39, are coupled in an axially slidable and angularly fixed way to the sectors 54 and are coupled to the sectors 54 themselves by interposition of a retention device 67.

The device 67 comprises, for each small block 65, a corresponding spring 68 that keeps the small block 65 itself in a position axially fixed with respect to the corresponding sector 54 during a first portion of axial travel made by the sector 54 itself starting from the central idle position, referred to as pre-synchronization travel. In said first portion of travel, the small block 65 pushes an annular portion 69 of the ring 39 axially under the driving action exerted by the radial thrust of the spring 68 in order to bring the conical surface 40 to engage with the surface 47. The device 68 is releasable when the axial travel of the sector 54 continues further towards the lateral end-of-travel engagement position.

In particular, each small block 65 is set radially between a corresponding sector 54 and a corresponding toothed portion 62 of the ring gear 29, whilst the latter has three axial through grooves 71 (Figure 4), which axially guide respective portions 72 of the small blocks 65. The device 68 comprises, for each small block 65, a corresponding pin 73, which can slide radially in a guide cavity 74 made in the corresponding sector 54. The spring 68 is housed in the cavity 74 and pushes the tip of the pin 73 to engage in an axial retention seat 75 made in the small block 65. At the end of the pre-synchronization travel, the small block 65 can no longer advance on account of the axial contrast surface, defined by the portion 69, having become fixed, so that the external tip of the pin 73 tends to follow a terminal ramp 77 of the seat 75 to exit progressively from the seat 75 itself, receding radially in the cavity 74 against the elastic action of the device 68. The seat 75 is symmetrical, i.e., it has two ramps 77 opposite to one another for operation in regard to the gears 9 and 10, respectively.

Preferably, according to what is shown in Figure 3, the small blocks 65 have an axial length equal to that of the sectors 54, and each comprises two ends 79 arranged on opposite sides of the portion 72, which in turn projects radially outwards with respect to the ends 79 and has an axial length equal to that of the groove 71. At the same time, for each ring 39, the portion 59 surrounds an end 79 of the small blocks 65 and axially faces the portions 72, whilst the portion 69 is set alongside the portion 59 and carries the toothing 41.

The toothing 41 is discontinuous, i.e., it is made up of three toothed portions 41a, which alternate with three edges 41b without toothing and are arranged in a position corresponding to the toothings 55 of the sectors 54.

As regards the simultaneous axial driving of the sectors 54 and engagement of the gears 9 and 10, with reference to Figures 1 and 3, three control pins 101 are arranged at 120° apart about the axis 4, engage at one end thereof respective radial seats, each made in a corresponding sector 54, are thus fixed with respect to the sectors 54 and with respect to the shaft 3, and extend radially inwards starting from the sectors 54 themselves through the slots 25. The slots 25 have dimensions such as to enable axial translation of the respective pins 101 between the central idle position and the lateral end-of-travel engagement positions.

The device 16 comprises a control stem 103, which is coupled to the pins 101 via a cross journal 104, is housed in the cavity 5 of the shaft 3, and extends along the axis 4. The cross journal 104 comprises three radial arms 105 having respective seats engaged by the internal ends of the pins 101, in a fixed position, and a central portion 106 (Figure 3) coupled to one end of the stem 103 by means of a bearing (not shown), in particular a plain bearing.

As regards, instead, engagement of the gears 11 and 12, a stem 103a is provided in a direction parallel to, and set at a distance from, the axis 4 and, hence, the stem 103. The control pins provided for engagement of the gears 11 and 12 are carried in a fixed position by a supporting ring 107, which is traversed with play by the stem 103 and has a circular track coupled to one end of the stem 103a by means of a bearing (not shown), in particular a plain bearing.

The stems 103, 103a extend outside of the cavity 5 on the side of the end 6, where they have respective terminal portions 108, 108a external to the shaft 3 and actuated for causing translation of the stems 103, 103a themselves in a direction parallel to the axis 4 under the control transmitted mechanically starting from the grip 13.

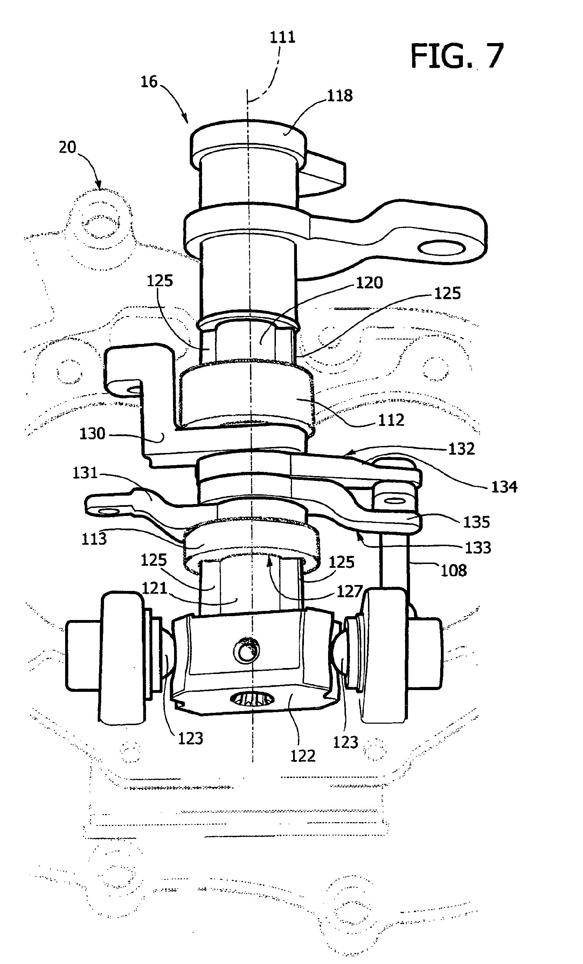

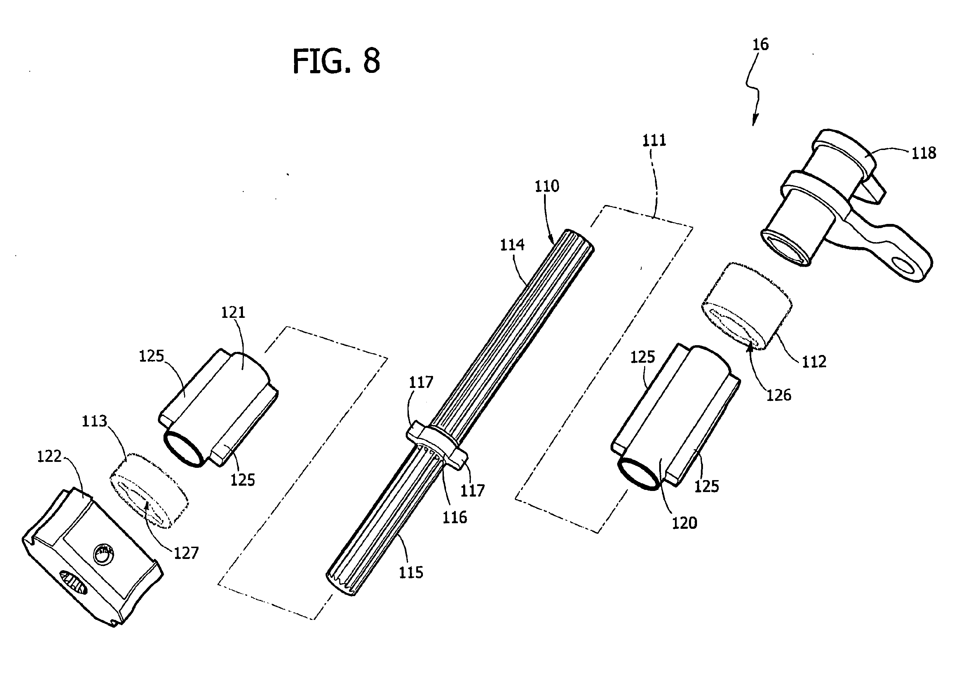

With reference to Figures 7 and 8, the device 16 comprises a control spindle 110, which has an axis 111 orthogonal and skew with respect to the axis 3, is set partly in a position facing the end 6 of the shaft 3 and in an intermediate position between the axis 4 and the axis of another shaft of the gear change 2, and is supported by the structure 20 via two fixed portions 112, 113 axially fixed and set at a distance from one another.

The spindle 110 comprises a top terminal axial portion 114 and a bottom terminal axial portion 115, which are provided, on the external side surface thereof, with respective knurlings or groovings. The spindle 110 further comprises an intermediate portion 116, which brings into a fixed position two fingers 117, which are diametrally opposite to one another and project radially with respect to the axial portions 114, 115.

A lever member 118 is fitted in a fixed position on the end of the axial portion 114 and is coupled to the grip 13 by means of a lever transmission 119 (partially shown and not described in detail), which is able to bestow upon the spindle 110 a motion of selection of the ranges, in translation along the axis 111, and a motion of engagement of the gears, in rotation about the axis 111 in opposite directions starting from a central reference position corresponding to the idle or neutral condition of the gear change 2.

The device 16 further comprises two sleeves 120, 121, which are arranged on opposite axial sides of the portion 116 and are fitted on the axial portion 114 and 115, respectively, in an angularly idle and axially fixed position. In particular, the sleeve 120 is gripped axially between the member 118 and the portion 116, whilst the sleeve 121 is gripped between the portion 116 and a positioning member 122.

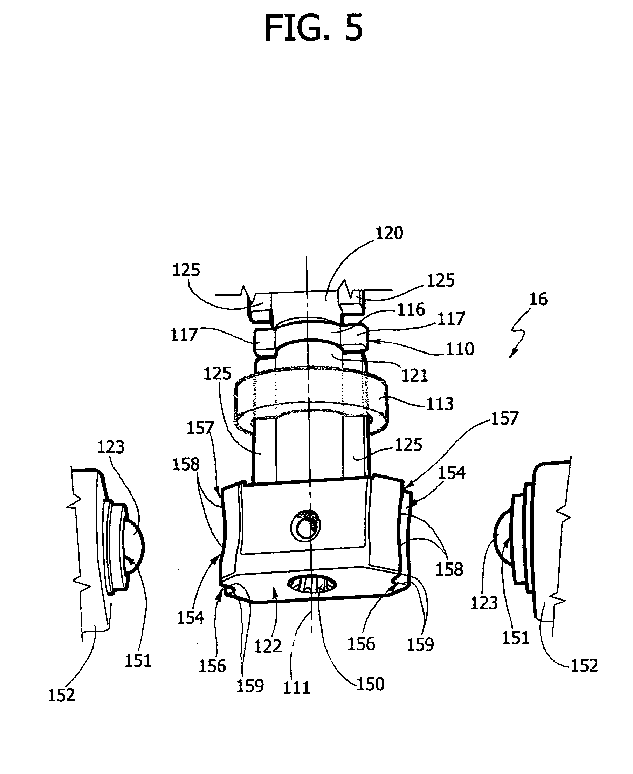

With reference to Figures 7 and 5, the member 122 is fitted in a fixed position on the end of the axial portion 115, via a grooved or knurled coupling 150, and is coupled to two substantially spherical bodies 123, which are arranged in positions diametrally opposite to one another with respect to the axis 111 and are partially housed in respective seats 151 made in portions 152 fixed with respect to the structure 20. The seats 151 house respective elastic elements (not shown), which exert a thrust on the respective bodies 123 towards the member 122 in a radial direction to bring the spindle 110 angularly always back into the central reference or idle position and axially into a pre-defined reference axial position when the gears are disengaged and the action of manual control on the grip 13 ceases.

In particular, the bodies 123 are slidingly coupled on respective tracks 154, which are provided on the member 122, are diametrally opposite to one another and each define two centring profiles 156 and 157, that can be obtained by means of planes of section orthogonal to the axis 111 and, respectively, by means of planes of section on which the axis 111 lies.

The profiles 156, 157 have a curved U shape, which is specular with respect to its own half, with the concavity facing towards the outside of the member 122. In particular, the profile 156 has two ramps 159 radiused and convergent with respect to one another in a central point, which is radially more internal with respect to the other points of the profile 156 and defines the central idle position of the spindle 110 when it is engaged by the body 123. Likewise, the profile 157 has two ramps 158 radiused and convergent with respect to one another in a central point, which is radially more internal with respect to the other points of the profile 157 and defines the reference axial position of the spindle 110 when it is engaged by the body 123.

The sleeves 120, 121 each carry, in a fixed position, a corresponding pair of radial appendages 125, which are diametrally opposite to one another, are elongated in a direction parallel to the axis 111, and, when the spindle 110 is in its central idle position, are aligned to the fingers 117. The sleeves 120, 121 engage in an angularly fixed and axially slidable way respective fixed guide seats 126, 127, which are made in the portions 112 and 113, respectively, and are complementary to the shape of the appendages 125 for guiding the sleeves 120, 121 themselves, and, hence, the spindle 110, along the axis 111.

The device 16 further comprises four levers 130, 131, 132, 133, which are axially packed tight between the portions 112 and 113, are hence fixed along the axis 111, are fitted on the sleeves 120, 121 and on the portion 116, each has an axial height substantially equal to that of the fingers 117, and are each associated to a corresponding range of gears.

The levers 130-133 are constrained angularly to the appendages 125 of the sleeves 120, 121 or else to the fingers 117 of the portion 116. As will be described more fully hereinafter, just one of the levers 130-133 is selectively coupled to the fingers 117 to turn together with the spindle 110 about the axis 111.

With reference to Figure 7, the levers 130-133 comprise respective plate-like radial arms, the ends of which are coupled to the ends of respective control stems, part of which are housed in the shafts of the gear change 2. In particular, the levers 132, 133 comprise respective radial arms 134, 135, which are hinged at their ends to the portions 108 and 108a, respectively, of the stems 103, 103a, with axes of articulation parallel to the axis 111.

During the motion of selection of the spindle 110, the fingers 117 translate axially and come to engage in any one of the levers 130-133, whilst the other levers remain coupled to the appendages 125. In other words, during displacement of the grip 13 along the path 14, the spindle 110 translates axially so as to select one of the levers and, hence, one of the ranges.

In particular, if the spindle 110 is to be displaced along the axis 111 to select a gear range different from the one envisaged in its reference axial position, translation of the member 122 brings about "climbing" (in terms of relative motion) of the bodies 123 up one of the ramps 158 of the corresponding profiles 157. The axial translation of the ramps 158 brings about a radial compression outwards to cause recession of the bodies 123 in the respective portions 152 against the action of the aforesaid elastic elements, whilst the bodies 123 remain engaged in the central points of the respective profiles 156.

By moving the grip 13 along the longitudinal engagement path 15, the spindle 110 moves with motion of engagement in rotation starting from its own angular reference position: the fingers 117 cause rotation only of the lever selected about the axis 111, whilst the sleeves 120, 121 and hence the other levers remain in a fixed angular position with respect to the structure 20.

At the same time, the rotation of the spindle 110 causes "climbing" (in terms of relative motion) of the bodies 123 up one of the ramps 159 of the corresponding profiles 156. The rotation of the ramps 159 brings about a radial compression outwards to cause further recession of the bodies 123 in the respective portions 152 against the action of the elastic elements, whilst the relative position between the bodies 123 and the respective profiles 157 remains the one assumed previously at the end of the axial translation of selection.

During the rotary motion of engagement, on account of the circular path of the hinging points between the ends of the arms 134, 135 and the portions 108, 108a of the stems 103, 103a, the latter have an oscillation in the planes of lie of the respective levers 132, 133 (orthogonal to the axis 11) during the motion of engagement: for example, said oscillation is compensated by the internal play of the plain bearings present in the cross journal 104 and in the ring 107.

An axial translation of the stem 103 starting from the central idle position causes simultaneous displacement of the three sectors 54 towards the side engagement end-of-travel position that has been set, for example towards the gear 9. The sectors 54 in the first portion of (pre-synchronization) travel draw along with them the three small blocks 65, thanks to the elastic action of the device 68. When the surfaces 40, 47 enter into engagement with respect to one another under the axial thrust of the small blocks 65, the gear 9 assumes substantially the same speed of rotation of the ring 39 and, hence, of the shaft 3, given that the ring 39 is driven in rotation by the device 57 in this step.

Continuing the axial travel of the sectors 54, the pins 73 disengage from the respective seats 75, whilst the toothing 55 of the sectors 54 starts to mesh with the toothing 41 of the ring 39. During this meshing step, the toothing 41 aligns progressively with the toothing 55 rotating in a circumferential direction, thanks to an appropriate front profile of the teeth, which is in itself known and not described in detail herein, and hence recovers the play of half a pitch defined by the device 57.

Then, in the final part of the travel of the sectors 54, the toothing 46 also meshes with the toothing 55 and progressively aligns with the toothing 55 itself, thanks to an appropriate front profile of the teeth, in itself known and not described in detail.

Obviously, by controlling the disengagement, the stem 103 and, then, the sectors 54 translate in an axial direction opposite to the one previously set to disengage the toothing 55 of the sectors ???65 [?54] progressively from the toothings 46 and 41.

During the disengagement, the radial thrust exerted by the aforesaid elastic elements on the bodies 123 causes a component of tangential thrust on the ramps 159 that tends to facilitate return of the spindle 110 into its central idle position, in which the bodies 123 engage the central point of the profiles 156.

Next, if the gear disengaged belongs to a range different from what is envisaged in the reference axial position of the spindle 110, the radial thrust exerted by the elastic elements on the bodies 123 causes a component of axial thrust on the ramps 158, which tends to cause the bodies 123 engaged to return to the central point of the profiles 157 and, hence, to bring the spindle 110 back into its reference axial position.

The advantages of the control device 16 are described in what follows. The fact that a single body or member 122 has at least one angular centring profile 156 and at least one axial centring profile 157 enables a compact solution to be obtained with a relatively contained number of components.

Furthermore, the fact of making the angular centring profile 156 and the axial centring profile 157 on one and the same side track 154 enables use of a single body 123 for both of the axial and angular movements of positioning of the spindle 110, with a further reduction in the overall dimensions and number of components.

The fact of having two tracks 154 and two bodies 123 diametrally opposite to one another enables a solution that is balanced from the standpoint of transmission of forces.

Finally, it is clear that modifications and variations can be made to the device 16 described herein, with reference to the attached plate of drawings without thereby departing from the scope of protection of the present invention, as defined in the annexed claims.

In particular, the positioning device defined by the member 122 and by the bodies 123 could be envisaged for a spindle, which, by rotating, causes selection, whilst, by translational axially, causes engagement of the gears.

In addition, just one track 154 and just one body 123 could be provided, instead of having two in diametrally opposite positions; and/or the bodies 123 could be replaced by elastically deformable thrust bodies, to avoid the use of elastic elements in the seats 151; and/or the body 122 could be replaced by a portion integral with the spindle 110 provided with the profiles 156, 157.

## Claims

1. A control device (16) for a gear change (2) of a motor vehicle comprising:
- a control spindle (110) extending along an axis thereof (111), provided with at least one radial control finger (117), and movable with respect to a fixed supporting structure (20) with an axial translational motion and with a rotary motion about said axis (111), to select the ranges of the gears and, for each of said ranges, to engage at least one gear starting from an idle condition;
- first axial-positioning means (157, 123) to bring said control spindle (110) into a pre-defined axial reference position along said axis (111) with respect to said fixed supporting structure (20);
- second axial-positioning means (156, 123) to bring said control spindle (110) into a pre-defined angular reference position about said axis (111) with respect to said fixed supporting structure (20);
**characterized in that** said first and second positioning means comprise:
- thrust means (123) designed to be carried by said fixed supporting structure (20); and
- respective centring profiles (156, 157), which are coupled to said thrust means (123), are shaped in such a way as to define said reference positions and are provided on one and the same positioning body (122) coupled in a fixed position with respect to said control spindle (110).

2. The device according to Claim 1, **characterized in that** said positioning body is coupled to one end of said control spindle (110) .

3. The device according to Claim 1 or Claim 2,
**characterized in that** the centring profiles (156, 157) of said first positioning means and of the second positioning means are provided on one and the same track (154) of said positioning body (122), on which said thrust means act (123), and are defined, respectively, by a plane of section orthogonal to said axis (111) and by a plane of section on which said axis lies (111).

4. The device according to Claim 3, **characterized in that** said first and second positioning means comprise two said tracks (154) diametrally opposite to one another with respect to said axis (111).

5. The device according to any one of the preceding claims, **characterized in that** said thrust means comprise at least one substantially spherical body (123) partially housed in a seat (151) designed to be carried in a fixed position by said fixed supporting structure (20) and housing elastic means that exert a thrust on said substantially spherical body (123) towards said positioning body (122) in a radial direction.

6. The device according to any one of the preceding claims, **characterized in that** each said centring profile (156, 157) comprises two respective ramps (159, 158) radiused and convergent with respect to one another in a central point, which is radially more internal with respect to the other points of the centring profile (156, 157) and defines the corresponding reference position of said control spindle (110) when it is engaged by said thrust means (123).
